(19) Europäisches Patentamt
European Patent Office
Office européen des brevets

(11) **EP 3 672 171 A1**

(12) **EUROPEAN PATENT APPLICATION**
published in accordance with Art. 153(4) EPC

(43) Date of publication:
**24.06.2020 Bulletin 2020/26**

(51) Int Cl.:
***H04L 12/801*** (2013.01)

(21) Application number: **19760226.1**

(22) Date of filing: **10.01.2019**

(86) International application number:
**PCT/CN2019/071139**

(87) International publication number:
**WO 2019/165855 (06.09.2019 Gazette 2019/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.02.2018 CN 201810170568**

(71) Applicant: **Huawei Technologies Co., Ltd.**
**Longgang District**
**Shenzhen, Guangdong 518129 (CN)**

(72) Inventors:
• **YUAN, Feng**
**Shenzhen**
**Guangdong 518129 (CN)**

• **LIU, Heyang**
**Shenzhen**
**Guangdong 518129 (CN)**
• **LI, Zhaogeng**
**Department Of Computer Science And Technology**
**Beijing 100084 (CN)**
• **WANG, Chuang**
**Shenzhen**
**Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **MESSAGE TRANSMISSION METHOD AND DEVICE**

(57) Embodiments of this application disclose a method for transmitting a packet. The method includes: receiving, by a source end network device, N packets of a first service flow, where N is an integer greater than or equal to 1; allocating, by the source end network device, a channel number to each of the N packets based on a channel table; generating, by the source end network device, a virtual port number for each packet based on a source port number of the N packets and the channel number corresponding to each packet, and setting the generated virtual port number in the corresponding packet; and sending, by the source end network device, the N packets for which the virtual port numbers are set to a routing and forwarding device, where the virtual port numbers are used by the routing and forwarding device to allocate one or more forwarding paths. In this way, forwarding path congestion is reduced.

FIG. 2

# Description

This application claims priority to Chinese Patent Application No. 201810170568.6, filed with the China National Intellectual Property Administration on February 28, 2018 and entitled "METHOD AND APPARATUS FOR TRANSMITTING PACKET", which is incorporated herein by reference in its entirety.

## TECHNICAL FIELD

This application relates to the communications field, and in particular, to a method and an apparatus for transmitting a packet.

## BACKGROUND

An existing unicast routing and forwarding mechanism cannot well utilize an advantage of a large quantity of equal cost paths between east-west traffic in a new network architecture. How to schedule traffic to enable a link bandwidth in a network to be fully utilized becomes an important problem. A feature of transmitting a flow in a conventional transmission control protocol/internet protocol (transmission control protocol/internet protocol, TCP/IP) network protocol stack is:

1. Once a 5-tuple of a flow is determined, a path of the flow in a network, is further determined.
2. One flow can be transmitted by using only one path.

However, the conventional TCP/IP flow transmission mechanism also has a disadvantage:
A 5-tuple of a flow cannot be changed after being determined, a forwarding path is unique, and the advantage of a large quantity of equal cost paths in a Fat-tree network architecture cannot be fully utilized; and when a path that a newly added flow needs to pass through is already severely congested, a communication rate of the flow is severely affected by the congestion. Consequently, a rate of the newly added flow is extremely low, and a completion time of the flow is correspondingly increased. In addition, after the 5-tuple of the flow is determined, the forwarding path is fixed, and a dynamic change cannot be performed based on a congestion status of the path. Consequently, even if it is discovered that the current flow is congested, the flow cannot be effectively adjusted.

## SUMMARY

Embodiments of this application provide a method and an apparatus for transmitting a packet, to reduce forwarding path congestion.
According to a first aspect, an embodiment of this application provides a method for transmitting a packet. The method includes:

receiving, by a source end network device, N packets of a first service flow from a source end server, where N is an integer greater than or equal to 1; allocating a channel number to each of the N packets based on a channel table preset by the source end network device; generating, by the source end network device, a virtual port number for each packet based on a source port number of the N packets and the channel number corresponding to each packet, where the virtual port numbers are used by a routing and forwarding device to allocate one or more forwarding paths; setting, by the source end network device, the generated virtual port number in the corresponding packet; and sending the N packets for which the virtual port numbers are set to the routing and forwarding device.
In this way, the source end network device allocates different channel numbers to the plurality of packets of the same service flow, and generates the virtual port number for each packet, so that after the plurality of packets are entered into a data center physical network, the plurality of packets of the same service flow can be forwarded to a destination network device through a plurality of forwarding paths, thereby reducing forwarding path congestion. Optionally, the first service flow may be a TCP flow, and the source port number is a TCP port number.
In a possible implementation, the allocating, by the source end network device, a channel number to each of the N packets based on a channel table may be: allocating, by the source end network device, channel numbers sequentially to the N packets in an order of channel numbers in the channel table; or allocating, by the source end network device, the channel number randomly to each of the N packets based on the channel table.
In this implementation, channels are sequentially or randomly allocated, so that the packets allocated to the channels are relatively even, thereby improving channel utilization.
In another possible implementation, the allocating, by the source end network device, a channel number to each of the N packets based on a channel table may be: determining, by the source end network device, channel numbers sequentially for the N packets based on a remaining window size of each channel in the channel table, where a channel number of a channel with the largest remaining window size is preferentially allocated.
In this implementation, allocation is performed based on a real-time window usage status of each channel, so that more packets are allocated to a channel with a larger remaining window size, thereby reducing channel load.
In another possible implementation, after the sending, by the source end network device, the N packets for which the virtual port numbers are set to the routing and forwarding device, the method may further include: receiving, by the source end network device, feedback information sent by the destination network device, where the feedback information includes an identifier and/or a size of a packet received by the destination network device, and a channel number corresponding to the received packet; and updating, by the source end network device, a remaining window size of a corresponding channel based on the feedback information.

In this way, after receiving the packet, the destination network device notifies the source end network device, so that the source end network device releases occupation of the corresponding channel, to facilitate subsequent allocation of another packet, thereby improving the channel utilization.

According to a second aspect, an embodiment of this application provides a method for transmitting a packet. The method includes:

receiving, by a destination network device, N packets that are of a first service flow and that are sent by a source end network device, where N is an integer greater than or equal to 1; each of the N packets carries a virtual port number, and the virtual port number is generated by the source end network device for each packet based on a source port number of the N packets and a channel number corresponding to each packet; restoring, by the destination network device, all the virtual port numbers of the N packets to the source port number; and sorting, by the destination network device, the N packets with the restored source port number.

In this way, the destination network device restores the virtual port numbers of the plurality of packets of the same service flow to the source port number, and sorts the N packets, so that an upper-layer application can identify that the plurality of packets are of the same service flow.

According to a third aspect, an embodiment of this application provides an apparatus for transmitting a packet. The apparatus has a function of implementing any one of the implementations according to the first aspect or the second aspect. The function may be implemented by using hardware, or may be implemented by hardware by executing corresponding software. The hardware or the software includes one or more modules corresponding to the function.

According to a fourth aspect, an embodiment of this application provides an apparatus for transmitting a packet. The apparatus is a source end network device, and the apparatus includes: a processor and a memory. The processor and the memory are connected by using a bus. The memory stores a computer instruction, and the processor is configured to implement any one of the implementations according to the first aspect by executing the computer instruction.

According to a fifth aspect, an embodiment of this application provides an apparatus for transmitting a packet. The apparatus is a destination network device, and the apparatus includes: a processor and a memory. The processor and the memory are connected by using a bus. The memory stores a computer instruction, and the processor is configured to implement any one of the implementations according to the second aspect by executing the computer instruction.

According to a sixth aspect, an embodiment of this application provides a readable storage medium, and the storage medium stores a computer instruction used to implement any one of the implementations according to the first aspect or the second aspect.

According to a seventh aspect, an embodiment of this application provides a computer program product. The computer program product includes a computer software instruction. The computer software instruction may be loaded by a processor to implement a procedure in any one of the implementations according to the first aspect or the second aspect.

According to an eighth aspect, an embodiment of this application provides a chip apparatus. The chip apparatus includes a processor and a memory. The processor is connected to the memory, and the processor may run an instruction stored in the memory, so that the chip apparatus performs any one of the implementations according to the first or second aspect.

According to a ninth aspect, an embodiment of this application provides a communications apparatus. The communications apparatus may include an entity such as a terminal device or a chip. The communications apparatus includes a processor and a memory. The memory is configured to store an instruction, and the processor is configured to execute the instruction in the memory, so that the communications apparatus performs the method according to any one of the implementations according to the first or second aspect.

According to a tenth aspect, this application provides a chip system. The chip system includes a processor that is configured to support a network device in implementing the functions in the foregoing aspects, for example, sending or processing data and/or information in the foregoing method. In a possible design, the chip system further includes a memory, and the memory is configured to store a program instruction and data that are necessary for the network device. The chip system may include a chip, or may include a chip and another discrete device.

**DESCRIPTION OF DRAWINGS**

FIG. 1 is a schematic diagram of a system architecture to which a method for transmitting a packet is applied according to an embodiment of this application;
FIG. 2 is a schematic diagram of a method for transmitting a packet according to an embodiment of this application;
FIG. 3 is a schematic diagram of allocating channel numbers to a plurality of packets according to an embodiment of this application;
FIG. 4 is a schematic diagram of transmitting a plurality of packets through corresponding channels according to an embodiment of this application;

FIG. 5 is a schematic diagram of performing, by a routing and forwarding device, multipath forwarding on packets according to an embodiment of this application;

FIG. 6 is a schematic diagram of a packet header according to an embodiment of this application;

FIG. 7 is a schematic diagram of an apparatus for transmitting a packet according to an embodiment of this application;

FIG. 8 is another schematic diagram of an apparatus for transmitting a packet according to an embodiment of this application;

FIG. 9 is another schematic diagram of an apparatus for transmitting a packet according to an embodiment of this application; and

FIG. 10 is another schematic diagram of an apparatus for transmitting a packet according to an embodiment of this application.

## DESCRIPTION OF EMBODIMENTS

Embodiments of this application provide a method and an apparatus for transmitting a packet, to reduce forwarding path congestion.

The following clearly and completely describes the technical solutions in the embodiments of this application with reference to the accompanying drawings in the embodiments of this application. Apparently, the described embodiments are merely some but not all of the embodiments of this application. In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those expressly listed units, but may include other units not expressly listed or inherent to such a process, method, system, product, or device.

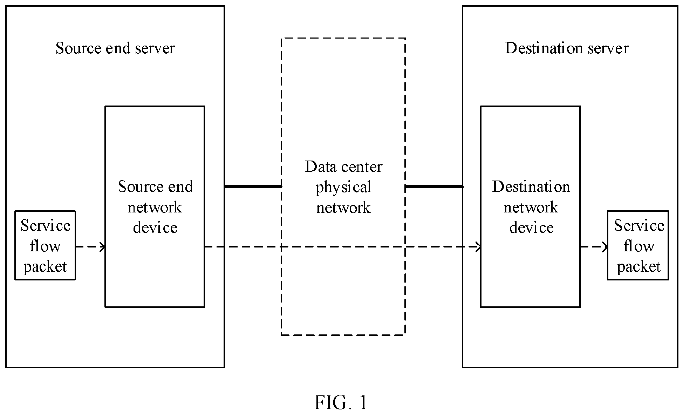

FIG. 1 is a schematic diagram of a system architecture to which a method for transmitting a packet is applied according to an embodiment of this application. FIG. 1 includes a source end server, a destination server, and a data center physical network DC. A source end network device is deployed in the source end server, and a destination network device is deployed in the destination server. The source end network device may be a source end virtual switch (open vswitch, OVS), and the destination network device may be a destination OVS.

Alternatively, the source end network device and the destination network device may be other network devices. This is not limited in this application. For ease of description, the following uses an example in which the source end network device is a source end OVS and the destination network device is a destination OVS for description.

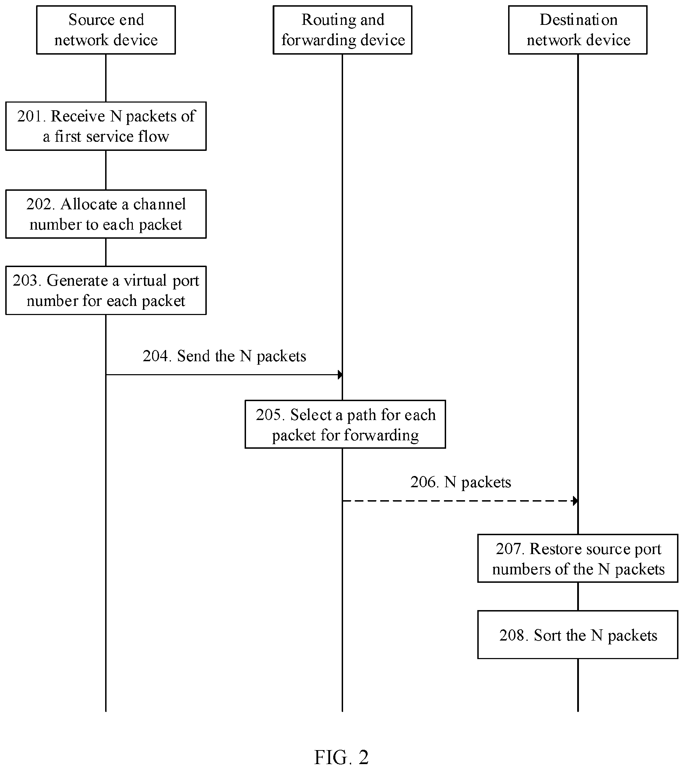

In this application, M virtual channels are established in the source end OVS, and M is an integer greater than or equal to 1. For example, M may be 6. The source end OVS maintains a channel table that has the M virtual channels, and the channel table includes a channel number of each virtual channel and a window usage status of each virtual channel. After generating packets of a service flow, the source end server sends packets to a routing and forwarding device in the data center physical network by using the source end OVS. Then, after selecting paths for the packets and correspondingly forwarding the packets, the routing and forwarding device in the data center physical network sends the packets to the destination server. In this application, after receiving the packets of the same service flow from the source end server, the source end OVS allocates a same channel number or different channel numbers to the packets (a channel number allocation manner is described in detail in step 202 in the following embodiment in FIG. 2), and generates one or more virtual port numbers based on the one or more channel numbers and port numbers of the packets. The one or more virtual port numbers are associated with the one or more channel numbers allocated by the OVS. If the channel numbers are different, the generated virtual port numbers are also different. The OVS sequentially sends the packets for which the virtual port numbers are set to the routing and forwarding device. The routing and forwarding device selects a corresponding forwarding path for each packet based on the virtual port number of each packet and according to a routing and forwarding mechanism. In this case, because the virtual port numbers of the plurality of packets of the same service flow may be different, the routing and forwarding device may select a plurality of forwarding paths for the plurality of packets, so that the packets of the same service flow are forwarded through different forwarding paths. After receiving the packets of the service flow, the destination server transfers the packets to the destination OVS for processing. The destination OVS may restore a source port number of the packets, sort the packets, and send the sorted packets to an upper-layer application for processing.

It should be noted that, the solutions provided in this application can be applicable to various network architectures. When a packet is transmitted in different network architectures, a basic packet attribute feature of the packet continues to be used for transmission. For example, if a packet transmitted between the source end server and the destination server is a packet of a TCP flow, the source port number described in the solutions of this application is a TCP port number.

The solutions provided in this application are described below by using examples. For ease of description, in the following embodiments, an example in which the source end network device is a source end OVS and the destination network device is a destination OVS is used for description.

Referring to FIG. 2, an embodiment of a method for transmitting a packet in the embodiments of this application includes the following steps.

201. The source end network device receives N packets of a first service flow.

When a source end server needs to send data of the first service flow to a destination server, the N packets of the first service flow are generated. The N packets are first processed by the source end network device, where N is an integer greater than or equal to 1, for example, N=3. Optionally, the first service flow is a TCP flow.

202. The source end network device allocates a channel number to each of the N packets based on a channel table.

The source end network device pre-establishes a plurality of channels, and the channels correspond to different channel numbers. The source end network device further maintains the channel table, for example, a virtual multi-channel table (Virtual Multi-channel). A quantity of channels, for example, six channels, may be manually configured.

After receiving the N packets of the first service flow, the source end network device first allocates one channel number to each packet. In a possible implementation, the allocating, by the source end network device, a channel number to each of the N packets based on a channel table may be: The source end network device allocates channel numbers sequentially to the N packets in an order of channel numbers in the channel table. For example, the order of the channel numbers in the channel table is 1 to 6. In this case, a channel 1 is allocated to the first packet, a channel 2 is allocated to the second packet, and a channel 3 is allocated to the third packet.

In another possible implementation, the allocating, by the source end network device, a channel number to each of the N packets based on a channel table may be: The source end network device allocates the channel number randomly to each of the N packets based on the channel table. For example, a channel 3 is randomly allocated to the first packet, a channel 5 is randomly allocated to the second packet, and a channel 4 is randomly allocated to the third packet.

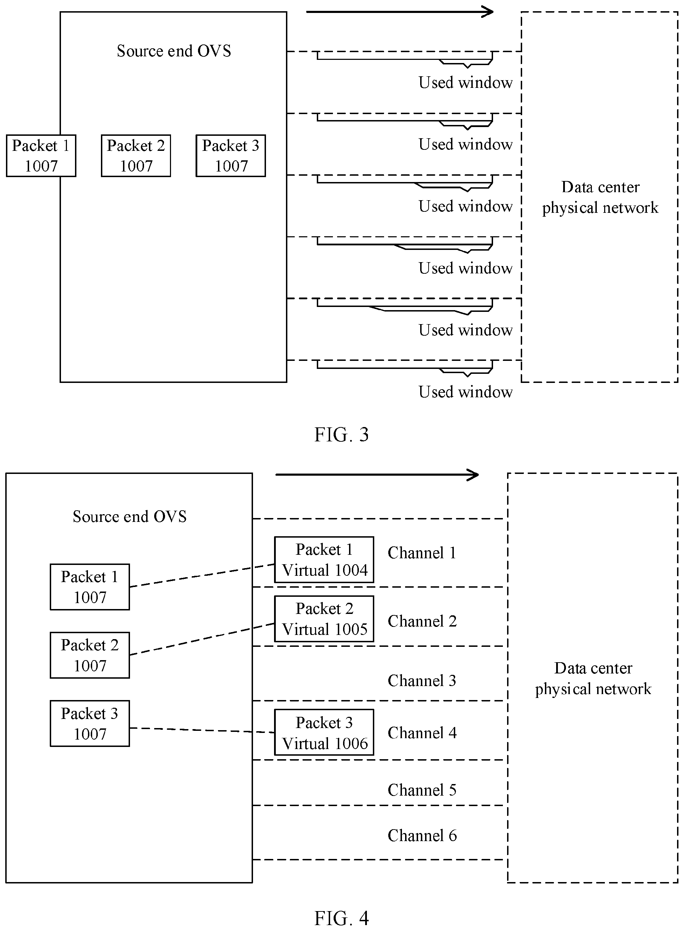

In another possible implementation, the allocating, by the source end network device, a channel number to each of the N packets based on a channel table may be: The source end network device determines channel numbers sequentially for the N packets based on a remaining window size of each channel in the channel table, and a channel number of a channel with the largest remaining window size is preferentially allocated. Referring to FIG. 3, the source end network device needs to send three packets whose source port numbers are all 1007. The source port numbers are consistent, it indicates that the three packets are packets of a same service flow. The source end network device establishes six virtual channels connected to a data center physical network, and each channel has a corresponding window size. An occupied part of the window indicates a used window size in the channel, and a remaining part of the window indicates an unused window size in the channel. To enable load of each channel to be more balanced, when sequentially allocating the channel numbers to the packets, the source end network device preferentially allocates the channel number of the channel with the largest remaining window size to the packet. Therefore, based on this implementation, different channel numbers may be allocated to the N packets, or the channel numbers of the plurality of packets may be the same.

It should be noted that, after allocating the channel number to each packet, the source end network device updates a window usage status of a channel corresponding to the packet. For example, a total window size of the channel 1 is 10 M, a currently used window size is 3 M, and a remaining window size is 7 M. After the channel 1 is allocated to the first packet, a size of the first packet is 3 M, the used window size of the channel 1 is updated to 6 M, so that the remaining window size is 4 M. Therefore, the source end network device further allocates a channel number to a subsequent packet based on an updated usage status of each channel.

203. The source end network device generates a virtual port number for each packet based on the source port number of the N packets and the channel number corresponding to each packet, and setting the generated virtual port number in the corresponding packet.

After allocating the channel number to each packet, the source end network device generates the virtual port number for the packet. The virtual port number generated by the source end network device complies with a path allocation rule of a routing and forwarding mechanism. For example, the routing and forwarding device in the data center physical network can identify the virtual port number, and can allocate a corresponding forwarding path to the packet through a hash operation. Optionally, a manner of generating the virtual port number is as follows:

$$p' = ((p - c) \,\&\, 7) + (p \,\&\, (\sim 7))$$

p' represents a virtual port number, p represents a source port number, c represents a channel number, and 7 represents a total quantity of channels plus one. It should be noted that, the manner of generating the virtual port number is not unique, provided that the generated virtual port number meets the routing and forwarding mechanism and different virtual port numbers can be generated based on different channel numbers. This is not limited in this application.

204. The source end network device sends the N packets for which the virtual port numbers are set to the routing and forwarding device, where the virtual port numbers are used by the routing and forwarding device to allocate one or more forwarding paths.

Optionally, the source end network device sends the N packets for which the virtual port numbers are set to the routing and forwarding device separately through corresponding channels. As shown in FIG. 4, after selecting channel numbers for three packets in the figure and generating corresponding virtual port numbers, the source end network device sends the three packets to the routing and forwarding device in the data center physical network through the corresponding channels.

205. The routing and forwarding device selects a corresponding forwarding path based on the virtual port number of each of the N packets, so that the packet reaches the destination network device through the corresponding forwarding path.

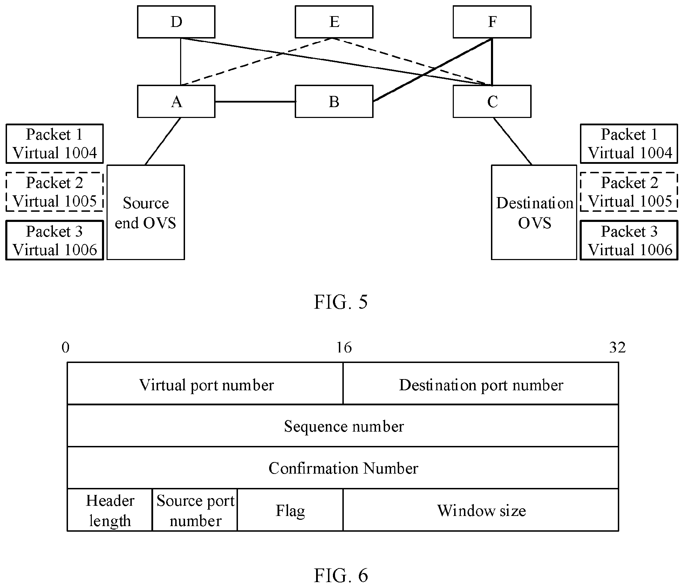

After receiving the packets sent by the source end network device, the routing and forwarding device in the data center physical network selects the path for each packet based on the routing and forwarding mechanism. A rule of the allocation may be that the path is selected based on 5-tuple information. As shown in FIG. 5, A to F in FIG. 5 represent a plurality of routing and forwarding devices in the data center physical network.

206. The destination network device receives the N packets that are of the first service flow and that are sent by the source end network device.

After receiving the packets sent by the routing and forwarding device, the destination server first transfers the packets to the destination network device for processing.

Optionally, after receiving the N packets of the first service flow, the destination network device may further send feedback information to the source end network device. The feedback information includes an identifier and/or a size of a packet received by the destination network device, and a channel number corresponding to the received packet. Therefore, the source end network device updates a remaining window size of a corresponding channel based on the feedback information. In this way, the source end network device allocates more properly a channel number to a packet subsequently, so that channel load is more balanced.

207. The destination network device restores all the virtual port numbers of the N packets to the source port number.

The destination network device first restores the source port number of each packet, and the restoration manner may be restoring the source port number based on a field carrying the source port number in each packet. As shown in FIG. 6, when setting the virtual port number for each packet, the source end network device sets the virtual port number in the field storing the source port number, and sets the source port number in a reserved field of the packet. The destination network device parses the reserved field in the packet, to restore the source port number of the packet.

208. The destination network device sorts the N packets with the restored source port number.

Each packet carries a corresponding sequence number, indicating a location of the packet in the first service flow. Because the plurality of packets in the first service flow may be sent to the destination network device through different forwarding paths, arrival of the packets in the first service flow may be disordered. The destination network device sorts the plurality of packets in the first service flow based on the sequence number obtained through parsing. There are a plurality of packet sorting manners, for example, a binary-tree sorting manner or another sorting manner. This is not limited in this application.

In this embodiment of this application, the source end network device allocates different channel numbers to the plurality of packets of the same service flow, and generates the virtual port number for each packet, so that after the plurality of packets of the same service flow are entered into the data center physical network, the plurality of packets of the same service flow can be forwarded to the destination network device through a plurality of forwarding paths, thereby reducing forwarding path congestion.

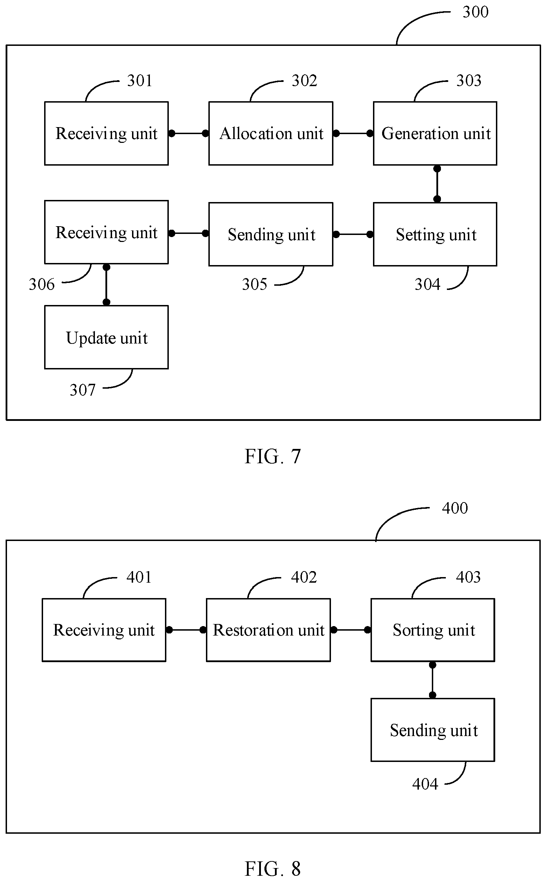

FIG. 7 is a schematic diagram of an embodiment of an apparatus for transmitting a packet in the embodiments of this application. The apparatus 300 is a source end network device, and the apparatus 300 includes:

a receiving unit 301, configured to receive N packets of a first service flow, where N is an integer greater than or equal to 1;

an allocation unit 302, configured to allocate a channel number to each of the N packets based on a channel table;

a generation unit 303, configured to generate a virtual port number for each packet based on a source port number of the N packets and the channel number corresponding to each packet;

a setting unit 304, configured to set the virtual port number generated by the generation unit in the corresponding packet; and

a sending unit 305, configured to send the N packets for which the virtual port numbers are set to a routing and forwarding device, where the virtual port numbers are used by the routing and forwarding device to allocate one or more forwarding paths.

Optionally, the allocation unit 302 is specifically configured to:

allocate channel numbers sequentially to the N packets in an order of channel numbers in the channel table; or
allocate the channel number randomly to each of the N packets based on the channel table.

Optionally, the allocation unit 302 is specifically configured to:
determine channel numbers sequentially for the N packets based on a remaining window size of each channel in the channel table, where a channel number of a channel with the largest remaining window size is preferentially allocated.

Optionally, the apparatus 300 further includes:

a receiving unit 306, configured to: after the sending unit 305 sends the N packets for which the virtual port numbers are set to the routing and forwarding device receive feedback information sent by a destination network device, where the feedback information includes an identifier and/or a size of a packet received by the destination network device, and a channel number corresponding to the received packet; and
an update unit 307, configured to update a remaining window size of a corresponding channel based on the feedback information.

Optionally, the sending unit 305 is specifically configured to:
send the N packets for which the virtual port numbers are set to the routing and forwarding device separately through the corresponding channels.

Optionally, the first service flow is a TCP flow.

When the units described in the embodiment in FIG. 7 are run, the steps performed by the source end network device that are described in the embodiment in FIG. 2 may further be performed. For detailed content, refer to the embodiment in FIG. 2, and details are not described herein again.

FIG. 8 is a schematic diagram of another embodiment of an apparatus for transmitting a packet in the embodiments of this application. The apparatus 400 is a destination network device, and the apparatus 400 includes:

a receiving unit 401, configured to receive N packets that are of a first service flow and that are sent by a source end network device, where N is an integer greater than or equal to 1; and each of the N packets carries a virtual port number, and the virtual port number is generated by the source end network device for each packet based on a source port number of the N packets and a channel number corresponding to each packet;
a restoration unit 402, configured to restore all the virtual port numbers of the N packets to the source port number; and
a sorting unit 403, configured to sort the N packets with the restored source port number.

Optionally, the apparatus 400 further includes:
a sending unit 404, configured to: after the receiving unit 401 receives the N packets that are of the first service flow and that are sent by the source end network device, send feedback information to the source end network device, where the feedback information includes an identifier and/or a size of a packet received by the destination network device, and a channel number corresponding to the received packet, and the feedback information is used by the source end network device to update a remaining window size of a corresponding channel.

Optionally, the first service flow is a TCP flow.

When the units described in the embodiment in FIG. 8 are run, the steps performed by the destination network device that are described in the embodiment in FIG. 2 may further be performed. For detailed content, refer to the embodiment in FIG. 2, and details are not described herein again.

The apparatus in the embodiment in FIG. 7 further has an embodiment in another form.

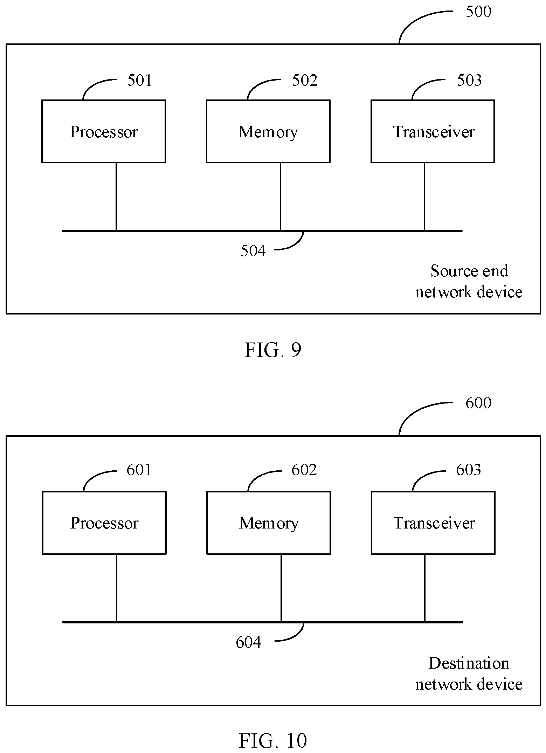

Referring to FIG. 9, an example of an apparatus for transmitting a packet according to an embodiment of this application is described. The apparatus 500 is a source end network device, and the apparatus 500 includes: a processor 501, a memory 502, and a transceiver 503. The processor 501, the memory 502, and the transceiver 503 are connected by using a bus 504. The transceiver 503 may include a transmitter and a receiver, and the memory 502 stores a computer instruction. The processor 501 is configured to implement the steps performed by the source end network device in the embodiment in FIG. 2 by executing the computer instruction.

The apparatus in the embodiment in FIG. 8 further has an embodiment in another form.

Referring to FIG. 10, an example of an apparatus for transmitting a packet according to an embodiment of this application is described. The apparatus 600 is a destination network device, and the apparatus 600 includes: a processor 601, a memory 602, and a transceiver 603. The processor 601, the memory 602, and the transceiver 603 are connected by using a bus 604. The transceiver 603 may include a transmitter and a receiver, and the memory 602 stores a computer instruction. The processor 601 is configured to implement the steps performed by a host in the embodiment in FIG. 2 by executing the computer instruction.

In another possible design, when the apparatus is a chip, the chip includes a processing unit and a communications unit. The processing unit may be, for example, a processor, and the communications unit may be, for example, an input/output interface, a pin, or a circuit. The processing unit may execute a computer executable instruction stored in a storage unit, so that the chip in a terminal performs the wireless communication method in any one of the implementations according to the first aspect. Optionally, the storage unit is a storage unit, for example, a register or a buffer, inside the chip. The storage unit may be alternatively a storage unit, for example, a read-only memory (read-only memory, ROM), or a static storage device of another type that can store static information and an instruction, or a random access memory (random access memory, RAM), located outside the chip and in the terminal.

The processor mentioned in any of the foregoing designs may be a general-purpose central processing unit (CPU), a microprocessor, an application-specific integrated circuit (application-specific integrated circuit, ASIC), or one or more integrated circuits for controlling program execution of the wireless communication method according to the first aspect.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods in the embodiments of this application. The storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

**Claims**

1. A method for transmitting a packet, comprising:

receiving, by a source end network device, N packets of a first service flow, wherein N is an integer greater than or equal to 1;
allocating, by the source end network device, a channel number to each of the N packets based on a channel table;
generating, by the source end network device, a virtual port number for each packet based on a source port number of the N packets and the channel number corresponding to each packet, and setting the generated virtual port number in the corresponding packet; and

sending, by the source end network device, the N packets for which the virtual port numbers are set to a routing and forwarding device, wherein the virtual port numbers are used by the routing and forwarding device to allocate one or more forwarding paths.

2. The method according to claim 1, wherein the allocating, by the source end network device, a channel number to each of the N packets based on a channel table comprises:

allocating, by the source end network device, channel numbers sequentially to the N packets in an order of channel numbers in the channel table; or

allocating, by the source end network device, the channel number randomly to each of the N packets based on the channel table.

3. The method according to claim 1, wherein the allocating, by the source end network device, a channel number to each of the N packets based on a channel table comprises:
determining, by the source end network device, channel numbers sequentially for the N packets based on a remaining window size of each channel in the channel table, wherein a channel number of a channel with the largest remaining window size is preferentially allocated.

4. The method according to claim 3, wherein after the sending, by the source end network device, the N packets for which the virtual port numbers are set to a routing and forwarding device, the method further comprises:

receiving, by the source end network device, feedback information sent by a destination network device, wherein the feedback information comprises an identifier and/or a size of a packet received by the destination network device, and a channel number corresponding to the received packet; and

updating, by the source end network device, a remaining window size of a corresponding channel based on the feedback information.

5. The method according to any one of claims 1 to 4, wherein the sending, by the source end network device, the N packets for which the virtual port numbers are set to a routing and forwarding device comprises:
sending, by the source end network device, the N packets for which the virtual port numbers are set to the routing and forwarding device separately through corresponding channels.

6. The method according to any one of claims 1 to 5, wherein the first service flow is a TCP flow.

7. A method for transmitting a packet, comprising:

receiving, by a destination network device, N packets that are of a first service flow and that are sent by a source end network device, wherein N is an integer greater than or equal to 1; and each of the N packets carries a virtual port number, and the virtual port number is generated by the source end network device for each packet based on a source port number of the N packets and a channel number corresponding to each packet;

restoring, by the destination network device, all the virtual port numbers of the N packets to the source port number; and

sorting, by the destination network device, the N packets with the restored source port number.

8. The method according to claim 7, wherein after the receiving, by a destination network device, N packets that are of a first service flow and that are sent by a source end network device, the method further comprises:
sending, by the destination network device, feedback information to the source end network device, wherein the feedback information comprises an identifier and/or a size of a packet received by the destination network device, and a channel number corresponding to the received packet, and the feedback information is used by the source end network device to update a remaining window size of a corresponding channel.

9. The method according to claim 7 or 8, wherein the first service flow is a TCP flow.

10. An apparatus for transmitting a packet, wherein the apparatus is a source end network device, and the apparatus comprises:

a receiving unit, configured to receive N packets of a first service flow, wherein N is an integer greater than or equal to 1;

an allocation unit, configured to allocate a channel number to each of the N packets based on a channel table;

a generation unit, configured to generate a virtual port number for each packet based on a source port number of the N packets and the channel number corresponding to each packet;

a setting unit, configured to set the virtual port number generated by the generation unit in the corresponding packet; and

a sending unit, configured to send the N packets for which the virtual port numbers are set to a routing and forwarding device, wherein the virtual port numbers are used by the routing and forwarding device to allocate one or more forwarding paths.

11. The apparatus according to claim 10, wherein the allocation unit is specifically configured to:

allocate channel numbers sequentially to the N packets in an order of channel numbers in the channel table; or
allocate the channel number randomly to each of the N packets based on the channel table.

12. The apparatus according to claim 10, wherein the allocation unit is specifically configured to:
determine channel numbers sequentially for the N packets based on a remaining window size of each channel in the channel table, wherein a channel number of a channel with the largest remaining window size is preferentially allocated.

13. The apparatus according to claim 12, wherein the apparatus further comprises:

a receiving unit, configured to: after the sending unit sends the N packets for which the virtual port numbers are set to the routing and forwarding device, receive, feedback information sent by a destination network device, wherein the feedback information comprises an identifier and/or a size of a packet received by the destination network device, and a channel number corresponding to the received packet; and
an update unit, configured to update a remaining window size of a corresponding channel based on the feedback information.

14. The apparatus according to any one of claims 10 to 13, wherein the sending unit is specifically configured to:
send the N packets for which the virtual port numbers are set to the routing and forwarding device separately through the corresponding channels.

15. The apparatus according to any one of claims 10 to 14, wherein the first service flow is a TCP flow.

16. An apparatus for transmitting a packet, wherein the apparatus is a destination network device, and the apparatus comprises:

a receiving unit, configured to receive N packets that are of a first service flow and that are sent by a source end network device, wherein N is an integer greater than or equal to 1; and each of the N packets carries a virtual port number, and the virtual port number is generated by the source end network device for each packet based on a source port number of the N packets and a channel number corresponding to each packet;
a restoration unit, configured to restore all the virtual port numbers of the N packets to the source port number; and
a sorting unit, configured to sort the N packets with the restored source port number.

17. The apparatus according to claim 16, wherein the apparatus further comprises:
a sending unit, configured to: after the receiving unit receives the N packets that are of the first service flow and that are sent by the source end network device, send feedback information to the source end network device, wherein the feedback information comprises an identifier and/or a size of a packet received by the destination network device, and a channel number corresponding to the received packet, and the feedback information is used by the source end network device to update a remaining window size of a corresponding channel.

18. The apparatus according to claim 16 or 17, wherein the first service flow is a TCP flow.

19. An apparatus for transmitting a packet, comprising: a processor and a memory, wherein the processor and the memory are connected by using a bus, the memory stores a computer instruction, and the processor is configured to implement the method according to any one of claims 1 to 6 by executing the computer instruction, or configured to implement the method according to any one of claims 7 to 9 by executing the computer instruction.

20. A computer-readable storage medium, comprising an instruction, wherein when the instruction is run on a computer, the computer is enabled to perform the method according to any one of claims 1 to 6, or the method according to any one of claims 7 to 9.

FIG. 1

| Source end network device | Routing and forwarding device | Destination network device |
|---|---|---|

201. Receive N packets of a first service flow

202. Allocate a channel number to each packet

203. Generate a virtual port number for each packet

204. Send the N packets

205. Select a path for each packet for forwarding

206. N packets

207. Restore source port numbers of the N packets

208. Sort the N packets

FIG. 2

FIG. 3

FIG. 4

D        E        F

A        B        C

| Packet 1 Virtual 1004 | | Packet 1 Virtual 1004 |
| --- | --- | --- |
| Packet 2 Virtual 1005 | Source end OVS | Packet 2 Virtual 1005 |
| Packet 3 Virtual 1006 | | Packet 3 Virtual 1006 |

Destination OVS

**FIG. 5**

0                  16                  32

| Virtual port number | | Destination port number | |
| --- | --- | --- | --- |
| Sequence number | | | |
| Confirmation Number | | | |
| Header length | Source port number | Flag | Window size |

**FIG. 6**

300

301
Receiving unit

302
Allocation unit

303
Generation unit

306
Receiving unit

305
Sending unit

304
Setting unit

307
Update unit

FIG. 7

400

401
Receiving unit

402
Restoration unit

403
Sorting unit

404
Sending unit

FIG. 8

500

| 501 | 502 | 503 |
|---|---|---|
| Processor | Memory | Transceiver |

504

Source end
network device

FIG. 9

600

| 601 | 602 | 603 |
|---|---|---|
| Processor | Memory | Transceiver |

604

Destination
network device

FIG. 10

## INTERNATIONAL SEARCH REPORT

| International application No. |
|---|
| **PCT/CN2019/071139** |

### A. CLASSIFICATION OF SUBJECT MATTER

H04L 12/801(2013.01)i

According to International Patent Classification (IPC) or to both national classification and IPC

### B. FIELDS SEARCHED

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 数据流, 业务流, 报文, 路由, 通道, 端口, 分配, data, stream, channel, message, rout +, port, assignment

### C. DOCUMENTS CONSIDERED TO BE RELEVANT

| Category* | Citation of document, with indication, where appropriate, of the relevant passages | Relevant to claim No. |
|---|---|---|
| Y | CN 107623646 A (HUAWEI TECHNOLOGIES CO., LTD.) 23 January 2018 (2018-01-23) description, paragraphs [0062]-[0070] | 1-20 |
| Y | CN 103634228 A (HUAWEI TECHNOLOGIES CO., LTD.) 12 March 2014 (2014-03-12) description, paragraphs [0086]-[0096] | 1-20 |
| A | CN 1855878 A (HUAWEI TECHNOLOGIES CO., LTD.) 01 November 2006 (2006-11-01) entire document | 1-20 |
| A | CN 107438035 A (ZTE CORPORATION) 05 December 2017 (2017-12-05) entire document | 1-20 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **29 March 2019** | **10 April 2019** |

| Name and mailing address of the ISA/CN | Authorized officer |
|---|---|
| **National Intellectual Property Administration, PRC (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2019/071139**

| Patent document cited in search report | | | Publication date (day/month/year) | Patent family member(s) | | | Publication date (day/month/year) |
|---|---|---|---|---|---|---|---|
| CN | 107623646 | A | 23 January 2018 | None | | | |
| CN | 103634228 | A | 12 March 2014 | US | 2016173384 | A1 | 16 June 2016 |
| | | | | EP | 3029897 | A1 | 08 June 2016 |
| | | | | WO | 2015074397 | A1 | 28 May 2015 |
| CN | 1855878 | A | 01 November 2006 | None | | | |
| CN | 107438035 | A | 05 December 2017 | WO | 2017202084 | A1 | 30 November 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810170568